(19) **Europäisches Patentamt**
**European Patent Office**
**Office européen des brevets**

(11) **EP 4 657 121 A1**

(12) **EUROPEAN PATENT APPLICATION**
published in accordance with Art. 153(4) EPC

(43) Date of publication:
03.12.2025 Bulletin 2025/49

(21) Application number: 23918470.8

(22) Date of filing: 24.08.2023

(51) International Patent Classification (IPC):
*G01S 19/08* (2010.01)    *G01S 19/25* (2010.01)
*G01S 19/33* (2010.01)    *G01S 19/37* (2010.01)

(52) Cooperative Patent Classification (CPC):
G01S 19/08; G01S 19/25; G01S 19/33;
G01S 19/37; G01S 19/43

(86) International application number:
PCT/JP2023/030494

(87) International publication number:
WO 2024/157510 (02.08.2024 Gazette 2024/31)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 27.01.2023 JP 2023011293

(71) Applicant: **Astemo, Ltd.**
**Chiyoda-ku,**
**Tokyo 1000004 (JP)**

(72) Inventors:
• **KIYOHARA Masahiro**
**Tokyo 100-8280 (JP)**
• **OTA Hiroki**
**Hitachinaka-shi, Ibaraki 312-8503 (JP)**
• **OGATA Takeshi**
**Hitachinaka-shi, Ibaraki 312-8503 (JP)**

(74) Representative: **MERH-IP Matias Erny Reichl
Hoffmann
Patentanwälte PartG mbB
Paul-Heyse-Straße 29
80336 München (DE)**

(54) **SELF-POSITION ACQUISITION DEVICE**

(57) The purpose of the present invention is to provide a self-position acquisition device with which it is possible, by performing positioning using a standalone positioning method whenever possible and minimizing use of a network-assisted method, to perform highly accurate positioning in a stable manner while minimizing cost. In the present invention, the positioning method is switched between a first positioning method (e.g., CLAS or HAS) for performing positioning on the basis of reception information for a positioning signal received from a positioning satellite and augmentation information for augmenting the reception information, and a second positioning method (network-assisted method) for performing positioning on the basis of the reception information and positioning assistance information received from a positioning server over a network, the switching being performed on the basis of an inhibition period in which accuracy is reduced and a validity period of the augmentation information in the first positioning method.

EP 4 657 121 A1

[FIG. 2]

# FIG. 2

```
           ┌─────────┐
           │  START  │
           └─────────┘
                │
                ▼
┌──────────────────────────────────────┐
│   ACQUIRE AUGMENTATION INFORMATION    │──── S101
└──────────────────────────────────────┘
                │
                ▼
┌──────────────────────────────────────┐
│      CALCULATE INTERRUPTION PERIOD    │──── S102
└──────────────────────────────────────┘
                │
                ▼         S103
          ◇─────────────────────◇     No
          │ DOES INTERRUPTION   │──────────────┐
          │   PERIOD OCCUR?     │              │
          ◇─────────────────────◇              │
                │ Yes                          │
                ▼                              │
┌──────────────────────────────────────┐       │
│ IDENTIFY FIRST TIME POINT tA THAT IS  │       │
│ TIME POINT AT WHICH VALIDITY PERIOD   │──── S104
│ OF AUGMENTATION INFORMATION ENDS,     │       │
│ RECEPTION OF WHICH IS COMPLETED       │       │
│ EARLIER THAN INTERRUPTION PERIOD      │       │
└──────────────────────────────────────┘       │
                │                              │
                ▼                              │
┌──────────────────────────────────────┐       │
│ IDENTIFY SECOND TIME POINT tB THAT IS │       │
│ VALIDITY PERIOD START TIME POINT OF   │──── S105
│ AUGMENTATION INFORMATION, RECEPTION   │       │
│ OF WHICH IS STARTED AFTER END OF      │       │
│ INTERRUPTION PERIOD                   │       │
└──────────────────────────────────────┘       │
                │          S106                 │
          ◇─────────────────────◇     Yes      │
          │ DOES SECOND TIME    │──────────────┤
          │ POINT tB ARRIVE BY  │              │
          │ FIRST TIME POINT tA?│              │
          ◇─────────────────────◇              │
                │ No                           │
                ▼                              │
┌──────────────────────────────────────┐       │
│ PERFORMS SWITCHING TO SECOND          │──── S107
│ POSITIONING METHOD AT FIRST           │       │
│ TIME POINT tA                         │       │
└──────────────────────────────────────┘       │
                │                              │
                ▼                              │
┌──────────────────────────────────────┐       │
│ RETURN TO FIRST POSITIONING METHOD    │──── S108
│ AT TIMING OF SECOND TIME POINT tB     │       │
└──────────────────────────────────────┘       │
                │                S109           │      S110
                ▼                              ▼
┌──────────────────────────────────────┐   ┌──────────────────────┐
│ DISCONNECT COMMUNICATION LINK ETC.,   │   │      MAINTAIN        │
│ USED IN SECOND POSITIONING METHOD     │   │ FIRST POSITIONING    │
└──────────────────────────────────────┘   │      METHOD          │
                │                           └──────────────────────┘
                │                                    │
                ▼◄──────────────────────────────────┘
           ┌─────────┐
           │   END   │
           └─────────┘
```

## Description

Technical Field

The present invention relates to a self-position acquisition device.

Background Art

Conventionally, technologies of measuring a current self-position of a moving body are known. For example, standalone positioning methods by which a vehicle alone performs positioning of the own vehicle on the basis of reception information included in a signal received from a positioning satellite are known. In addition, network-assisted methods of performing positioning of an own vehicle on the basis of reception information and positioning assistance information received from a positioning server over a network are also known. Moreover, PTL 1 discloses a technology of using the above-described two positioning methods in combination.

In the technology of PTL 1, a positioning method is switched from the standalone positioning method to the network-assisted method in a case of detecting that a vehicle is positioned in a space enclosed from above or predicting that the vehicle will move in the near future or in a case where a signal quality has decreased below a predetermined level.

Citation List

Patent Literature

PTL 1: JP 2009-115573 A

Summary of Invention

Technical Problem

However, also with spaces enclosed from above such as under a pedestrian footbridge, momentary blocking between a positioning satellite and an own vehicle may occur in many cases. Also in such cases, when the positioning method is switched to the network-assisted method every time as in the technology described in PTL 1, there is a possibility of excessive increase in additional cost such as a network usage fee.

The present invention is made in view of the above description, and an object of the present invention is to provide a self-position acquisition device with which it is possible, by performing positioning using a standalone positioning method whenever possible and minimizing use of a network-assisted method, to perform highly accurate positioning in a stable manner while minimizing cost.

Solution to Problem

In order to solve the above-described problem, a self-position acquisition device of the present invention is a self-position acquisition device installed in an own vehicle in which a positioning method is switched between a first positioning method for performing positioning on the basis of reception information of a positioning signal received from a positioning satellite and augmentation information for augmenting the reception information, and a second positioning method for performing positioning on the basis of the reception information and positioning assistance information received from a positioning server over a network, wherein the first positioning method is switched to the second positioning method on the basis of an interruption period in which accuracy is reduced and a validity period of the augmentation information in the first positioning method.

Advantageous Effects of Invention

According to the present invention, it is possible to provide a self-position acquisition device with which it is possible, by performing positioning using a standalone positioning method whenever possible and minimizing use of a network-assisted method, to perform highly accurate positioning in a stable manner while minimizing cost.

Problems, configurations, and effects other than those described above will be clarified by the following Description of Embodiments.

Brief Description of Drawings

[FIG. 1] FIG. 1 is a block diagram illustrating a configuration of a self-position acquisition device according to a first embodiment.

[FIG. 2] FIG. 2 is a flowchart illustrating an example of a flow of a switching process of a positioning method by the self-position acquisition device illustrated in FIG. 1.

[FIG.3] FIG.3 is a diagram illustrating a relationship between individual frames of items of augmentation information and validity periods of the items of augmentation information according to the first embodiment.

[FIG.4A] FIG.4A is a diagram illustrating a chronological order of states of the validity periods of the items of augmentation information in a case where reception of the augmentation information is interrupted according to the first embodiment.

[FIG.4B] FIG.4B is a diagram illustrating a chronological order of states of the validity periods of the items of augmentation information in a case where reception of the augmentation information is interrupted for a short time according to the first embodiment.

[FIG.5] FIG.5 is an illustrative view related to selection of a positioning satellite when an own vehicle moving amount is calculated on the basis of satellite positioning according to a second embodiment.

[FIG.6] FIG.6 is a block diagram illustrating a configuration of a self-position acquisition device according to a second embodiment.

[FIG.7] FIG.7 is a flowchart illustrating an example of a determination process in switching of an own vehicle moving amount calculation method by a calculation method switching unit illustrated in FIG.6.

[FIG.8] FIG.8 is a block diagram illustrating a self-position acquisition device according to a third embodiment.

Description of Embodiments

Hereinafter, embodiments of the present invention will be described with reference to the drawings. Note that configurations denoted by the same reference numerals in the respective embodiments have the same function in the respective embodiments, and the description thereof will be omitted, unless otherwise specified.

[First Embodiment]

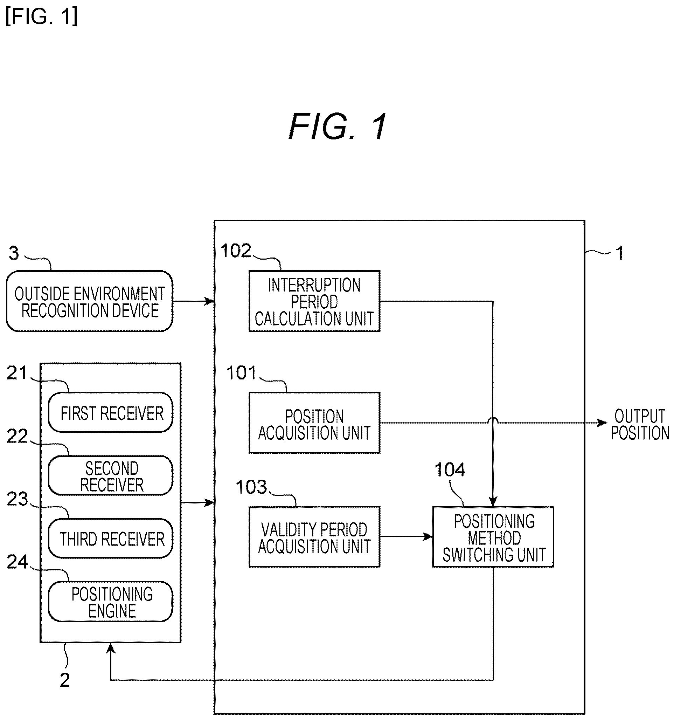

FIG.1 is a block diagram illustrating a configuration of a self-position acquisition device 1 according to a first embodiment. The self-position acquisition device 1 is installed in an own vehicle, acquires, as a self-position, a position of the own vehicle with respect to a travel route such as a straight road or a curve, and transmits the self-position to another device in the vehicle.

A positioning device 2 and an outside environment recognition device 3 are connected to the self-position acquisition device 1.

The positioning device 2 is installed in the own vehicle and includes a first receiver 21 that receives a positioning signal from a plurality of positioning satellites, a second receiver 22 that receives augmentation information for augmenting reception information of a positioning signal from another positioning satellite different from the plurality of positioning satellites, a third receiver 23 that receives positioning assistance information for assisting reception information of a positioning signal from a positioning server over a network, and a positioning engine 24 that performs a positioning arithmetic operation by any one of a first positioning method based on the reception information of the positioning signals and the augmentation information and a second positioning method based on the reception information of the positioning signals and the positioning assistance information. The reception information of the positioning signal includes at least one of a date and time when a positioning satellite transmits a positioning signal, position information of a positioning satellite itself, orbit information of another positioning satellite, and ionospheric information.

The first receiver 21 and the second receiver 22 are GNSS receivers that receive positioning signals and augmentation information from the positioning satellites such as GPS satellites and quasi-zenith satellites, and the third receiver 23 is a communication device for receiving the positioning assistance information used for a positioning method generally referred to as a network type RTK-GNSS, for example. The positioning engine 24 includes, for example, a microcontroller, and performs a process of calculating self-position information such as a latitude, a longitude, an altitude, and a time point by the positioning arithmetic operation and outputting the self-position information to the self-position acquisition device 1. The positioning device 2 also outputs the augmentation information acquired by the second receiver 22 to the self-position acquisition device 1.

The first receiver 21 and the second receiver 22 are not limited to the GNSS receivers and may be simple devices that track radio waves of positioning satellites on the basis of reception information of positioning signals. In this case, the self-position acquisition device 1 calculates self-position information. The first receiver 21 and the second receiver 22 are not limited to separate receivers and may be integrally configured in the same airframe to be configured to receive both positioning signals and augmentation information.

The first positioning method is a standalone positioning method in which a current position is calculated by a vehicle alone on the basis of a positioning signal of a positioning satellite. The first positioning method is a positioning method that is preferentially used in the self-position acquisition device 1 according to the present embodiment as long as reception of a positioning signal is not blocked and it is not difficult to perform positioning. In the first positioning method, for example, highly accurate positioning is performed by using augmentation information transmitted from a specific positioning satellite by a positioning augmentation information service such as a centimeter level augmentation service (CLAS) or a high accuracy service (HAS).

In the first positioning method, an error amount for each factor such as a satellite clock error, a satellite orbit error, a satellite radio wave bias, or an ionosphere delay error included in the augmentation information is acquired. Moreover, highly accurate positioning is performed by correcting reception information of positioning signals received from a plurality of other positioning satellites using an error amount for each factor.

In the first positioning method, it is necessary to continuously receive augmentation information for one frame. For example, in the CLAS, a time taken to receive augmentation information for one frame transmitted after guidance to a quasi-zenith satellite is 30 seconds. For example, when an obstacle such as a pedestrian footbridge, a pedestrian bridge, or a tunnel is interposed between a specific positioning satellite that transmits augmentation information and a receiving antenna of the positioning device 2 during the reception of the augmentation information for one frame, and the reception of the augmentation information by the second receiver 22 is hindered, it is not possible to use the augmentation information, and it is not possible to perform correction using an error amount for each factor included in the frame.

In addition, the augmentation information is characterized in that the error amount for each factor changes with elapse of time even in a case where the reception for one frame is completed without being hindered. Hence, when a certain time elapses after completion of the reception, it is not possible to use the augmentation information, and it is not possible to perform correction using the error amount for each factor included in a frame of the augmentation information. A time from when reception of the augmentation information is completed to when it is not possible to use the augmentation information varies depending on a type of positioning augmentation information service or expected positioning accuracy, but is often set to about 60 seconds.

The second positioning method is a network-assisted method of calculating a current position on the basis of positioning assistance information received from a positioning server over a communication network and reception information of positioning signals from positioning satellites. As the second positioning method, a real time kinematic (RTK) method of performing positioning on the basis of observation information of a positioning signal at a reference station provided or set in the vicinity of the own vehicle can be used, for example, in addition to a positioning signal from a positioning satellite. The RTK method is a method of removing a positioning error on the basis of a two-phase difference, and does not need to continuously receive augmentation information as in the positioning augmentation information service described above. In the second positioning method, it is necessary to continuously acquire the observation information of the reference station through communication lines at all times. Hence, in a case where a paid network is used for communication with a positioning server, a communication fee for communication is paid.

The outside environment recognition device 3 is installed in the own vehicle and recognizes the outside environment around the own vehicle. As the outside environment recognition device 3, sensors that measure a distance to and a positional relationship with an object, such as a stereo camera and a LiDAR, are mainly intentionally used. Besides, it is preferable that the outside environment recognition device 3 can observe a size or a type of object. The outside environment recognition device 3 acquires information of an object (hereinafter, also referred to as target object information) such as a space in which augmentation information cannot be received from a specific positioning satellite and positioning accuracy is decreased. The target object information includes information of a distance to a target object, and preferably includes information of the distance to the target object, an arrival time until the own vehicle reaches the target object, a positional relationship between the own vehicle and the target object, a size of the target object, and a type of target object. The outside environment recognition device 3 transmits the target object information obtained by measurement to the self-position acquisition device 1.

In the present embodiment, among objects, an obstacle that blocks a space between a specific positioning satellite that transmits augmentation information and receiving antennae of the respective receivers, such as a pedestrian footbridge and an elevated bridge over an own vehicle traveling path and a building constructed along the own vehicle traveling path, that is, an external environmental obstacle that may obstruct a space above the own vehicle, is regarded as an interruption factor. Moreover, a distance to the interruption factor, an arrival time, a size of the interruption factor, a positional relationship between the own vehicle and the interruption factor, and a type of interruption factor are set as the target object information of the interruption factor (hereinafter, also simply referred to as interruption factor information). Note that "interruption" indicates blocking between a specific positioning satellite and receiving antennae of the respective receivers such that the positioning accuracy is decreased due to the external environmental factor.

The self-position acquisition device 1 includes, for example, one or more microcontrollers having a central processing unit (CPU), a memory such as a ROM or a RAM, a timer, and an input/output unit. As illustrated in FIG.1, the self-position acquisition device 1 includes a position acquisition unit 101, an interruption period calculation unit 102, a validity period acquisition unit 103, and a positioning method switching unit 104, and these units are realized by software processing of the microcontrollers.

The position acquisition unit 101 acquires self-position information of the own vehicle from the positioning device 2. The position acquisition unit 101 transmits the acquired self-position information to another device in the vehicle. The position acquisition unit 101 may acquire, for example, a latitude, a longitude, an altitude, a time point, or the like obtained by a positioning arithmetic operation performed by the first receiver 21.

The position acquisition unit 101 may acquire the self-position information of the own vehicle from the outside environment recognition device 3. For example, the self-position may be estimated on the basis of a map and information such as a sign, an external appearance of a signboard, a store, or the like, a road marking, or the like obtained by imaging outside of a vehicle interior by using a monocular camera of the outside environment recognition device 3. In addition, information of the self-position obtained by observing the vehicle by using a sensor installed on an infrastructure side which is independent of the vehicle may be acquired by wireless communication, optical communication, or communication over the Internet, or the like.

The interruption period calculation unit 102 calculates an interruption period in which the accuracy is decreased in the first positioning method for acquiring the self-position. The interruption period calculation unit 102 acquires the target object information transmitted from the outside environment recognition device 3 and calculates the interruption period. For example, a stereo camera is used to recognize obstacles that may obstruct a space between a specific positioning satellite that transmits augmentation information and a receiving antenna of the positioning device 2, such as a pedestrian footbridge and an elevated bridge over an own vehicle traveling path, and distances to and sizes of the obstacles are measured.

The interruption period calculation unit 102 obtains an elevation angle and an azimuth angle of the specific positioning satellite that transmits the augmentation information by decoding reception information of a positioning signal from the specific positioning satellite transmitting the augmentation information. The interruption period calculation unit 102 determines whether or not reception of the augmentation information is interrupted by using the distance from the own vehicle to the target object and the size of the target object which are included in the acquired target object information, the elevation angle and the azimuth angle of the specific positioning satellite obtained by performing the decoding, a velocity of the own vehicle, and a traveling direction of the own vehicle. The interruption period calculation unit 102 transmits a determination result to the positioning method switching unit 104.

In a case where the interruption period calculation unit 102 determines that the reception of the augmentation information is interrupted, the interruption period calculation unit 102 further calculates an interruption start time point mainly on the basis of the distance to the target object, the positional relationship between the own vehicle and the target object, the velocity of the own vehicle, the traveling direction of the own vehicle, and the elevation angle and the azimuth angle of the specific positioning satellite in the target object information. Next, in addition to the interruption start time point, an interruption end time point is calculated mainly on the basis of the information of the size and the type of target object in the target object information. The interruption start time point indicates a time point at which reception interruption of the augmentation information due to the target object is started. The interruption end time point indicates a time point at which the reception interruption of the augmentation information due to the target object ends. A period from the interruption start time point to the interruption end time point is referred to as an interruption period. The interruption period calculation unit 102 transmits information of the calculated interruption period to the positioning method switching unit 104. The interruption period can also be referred to as an obstruction period in which a space above the own vehicle is obstructed.

Note that, as means for recognizing an obstacle, a stereo camera has been described as an example, but the LiDAR may be used, or the obstacle may be recognized by combining a position of the own vehicle with map information after another sensor such as a camera identifies the position of the own vehicle, and the interruption start time point or the interruption end time point may be calculated. Alternatively, the interruption period may be received and acquired by external communication.

The interruption period calculation unit 102 calculates a position of the own vehicle after t seconds on the basis of, for example, a distance to the target object, a positional relationship between the own vehicle and the target object, a velocity of the own vehicle, and a traveling direction of the own vehicle, and determines whether or not the target object blocks a space between the specific positioning satellite and the receiving antenna on the basis of the calculated position of the own vehicle and the elevation angle and the azimuth angle of the specific positioning satellite. In the case where the interruption period calculation unit 102 determines that the target object blocks a space between the specific positioning satellite and the receiving antenna, a time point after t seconds is set as the interruption start time point.

In calculating the interruption end time point, the interruption period calculation unit 102 may determine whether the interruption is momentary interruption or continuous interruption for a predetermined time or longer depending on the type of target object. That is, in the case of a target object below which passing can be performed in a short time, such as a signboard mounted on a gantry, a pedestrian footbridge, or a single-lane pedestrian bridge, passing below the target object is performed in a short time, for example, in about one second time, and thus, the interruption is recognized as the momentary interruption, and (t + 1) is set as an interruption end time point. On the other hand, in the case of a target object below which passing is performed for a long time, for example, about tens of seconds or longer, such as a tunnel or a lower road of a multi-level structure road, the interruption is recognized as the continuous interruption for a predetermined time or longer, and a value obtained by adding a constant value to t is set as the interruption end time point.

Note that, in a case where it is not possible to observe an object that can be the target object such as an obstacle or an obstructive object on a travel route of the own vehicle, or in a case where the own vehicle does not reach the target object within a predetermined time, for example, within a time of a frame length of the augmentation information since the target object is far away or a velocity of the own vehicle is slow, the case may be calculated as a case without an interruption period.

In addition, in order to reduce a processing load due to image recognition, a recognition target may be further simplified. For example, when a space above the vehicle is obstructed, detection that interruption occurs may only be performed.

The validity period acquisition unit 103 acquires a validity period of the augmentation information used for performing positioning. The validity period acquisition unit 103 acquires a reception completion time point of the augmentation information which is a start point of the validity period of the augmentation information, among the items of augmentation information received from the specific positioning satellite. For example, in the case of augmentation information acquired by the CLAS, the validity period acquisition unit 103 decodes the augmentation information transmitted from the specific positioning satellite in the L6 frequency band. A frame length of the augmentation information is known from a specification of each item of augmentation information.

In the case of the augmentation information obtained by the CLAS, it is determined that a satellite clock is transmitted every five seconds, and information such as ionospheric correction, atmospheric correction, a satellite orbit is transmitted every 30 seconds, and a message format, a message length, and a bit rate to be transmitted are also strictly determined. In addition, these details are distinguished by respective subtype numbers in a satellite message. Thus, the validity period acquisition unit 103 can acquire the reception completion time point of the augmentation information by a decoding result. The reception completion time point of the augmentation information indicates a time point at which reception of the augmentation information for one frame is completed.

There is a possibility that information included in the augmentation information may have discrepancy from an actual state with elapse of time and may have discrepancy from the actual state to the extent that the augmentation information becomes unusable when the time elapses too much. Therefore, the validity period acquisition unit 103 determines the validity period of the augmentation information. The validity period of the augmentation information is a period in which the discrepancy from the actual state is acceptable for use, and for example, in the present embodiment, the validity period is determined to be 60 seconds from the reception completion time point of the augmentation information.

In determination of the validity period of the augmentation information, a value of a specification determined for each item of information included in the augmentation information may be used. For example, in the case of the CLAS, the satellite clock has 10 seconds, and items of information such as the ionospheric correction, the atmospheric correction, and the satellite orbit have 60 seconds with specifications. However, since there is a possibility that the augmentation information may have gradual increase in discrepancy from the actual state with elapse of time, the validity period of the augmentation information may be set shorter particularly in a case where accuracy is required.

The validity period of the augmentation information may be changed depending on variations in error information, such as a case where variations in ionosphere delay error are increased according to the occurrence of the solar flare. Specifically, the validity period of the augmentation information may be set to be shorter since the ionospheric disturbance increases in a period or the like in which the solar flare is active, and conversely, the validity period of the augmentation information may be set to be longer in a period or the like in which the solar flare is inactive.

The positioning method switching unit 104 determines, based on the interruption period and the validity period of the augmentation information, whether or not a period in which the augmentation information received by the positioning device 2 is unusable occurs. For example, in the case where the positioning method switching unit 104 determines that the interruption period is longer than the validity period of the augmentation information and a period in which the augmentation information is unusable occurs, an instruction to switch a positioning method of the positioning device 2 from the first positioning method to the second positioning method is output to the positioning device 2 in advance. On the other hand, in the case where the positioning method switching unit 104 determines that the interruption period occurs but is within the validity period of the augmentation information and the period in which the augmentation information is unusable does not occur, the positioning method is not switched, and an instruction to maintain the first positioning method is output to the positioning device 2.

In a case where the positioning method is switched from the first positioning method to the second positioning method, a time needs to be taken for the positioning device 2 to establish a communication link, select a nearby reference station, or transmit, to a positioning server, a latitude and a longitude of the own vehicle for generating positioning assistance information, and wait for a response from the server side. Hence, the positioning method switching unit 104 outputs, to the positioning device 2, an instruction to start pre-processing for performing switching to the second positioning method, such as establishment of a communication link, at a timing before the switching to the second positioning method.

In a case where the interruption period ends and the augmentation information becomes usable during execution of the second positioning method, the positioning method switching unit 104 outputs, to the positioning device 2, an instruction to perform a process of returning to the first positioning method from the second positioning method.

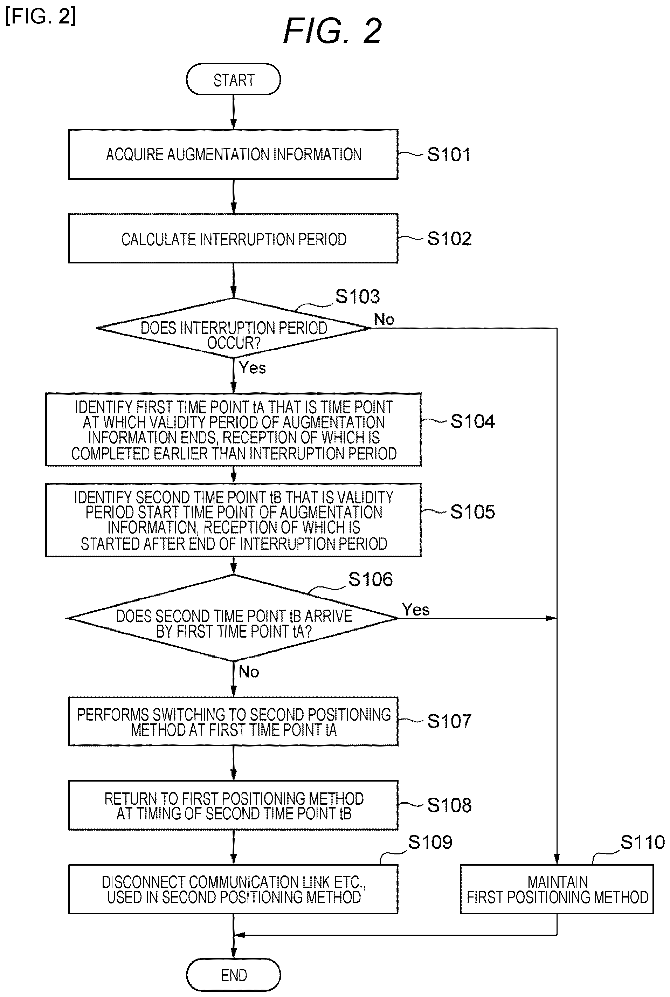

FIG.2 is a flowchart illustrating an example of a flow of a switching process of the positioning method by the self-position acquisition device 1 illustrated in FIG.1.

The interruption period calculation unit 102 of the self-position acquisition device 1 performs a process of acquiring the augmentation information from the second receiver 22 (step S101). The acquired augmentation information is provided to the positioning method switching unit 104 via the validity period acquisition unit 103.

The interruption period calculation unit 102 performs a process of calculating an interruption period (step S102). The interruption period calculation unit 102 determines whether or not the target object is present, on the basis of the target object information obtained by the outside environment recognition device 3, the elevation angle and the azimuth angle of the specific positioning satellite obtained by decoding the augmentation information, and the information of the velocity of the own vehicle and the traveling direction of the own vehicle. Moreover, in a case where the target object is observed, the interruption period is calculated, and information including a start time point and an end time point of the interruption period is provided to the positioning method switching unit 104. In a case where the target object is not observed or in a case where the vehicle does not reach the target object within a predetermined time, the interruption period calculation unit 102 provides, to the positioning method switching unit 104, information indicating that there is no interruption period.

The positioning method switching unit 104 checks whether or not the interruption period occurs (step S103). Moreover, in a case where it is determined that an interruption period occurs (Yes in step S103), augmentation information for completing the reception before the interruption period is identified, and a first time point tA that is a time point at which the validity period of the identified augmentation information ends is identified (step S104). The positioning method switching unit 104 compares the interruption start time point with the reception completion time point of the augmentation information and identifies the augmentation information, reception of which is completed closest to the interruption start time point and before the interruption period. Moreover, a process of identifying, as the first time point tA, a time point at which the validity period of the augmentation information ends is executed for the identified augmentation information.

When the first time point tA is identified, the positioning method switching unit 104 identifies a second time point tB that is a validity period start time point of the augmentation information, reception of which is started after the end of the interruption period (step S105). The positioning method switching unit 104 compares the interruption end time point in the interruption period with the reception completion time point of the augmentation information and identifies the augmentation information, reception of which is started closest to the interruption end time point and after the interruption end time point. Moreover, a process of identifying, as the second time point tB, a time point at which the validity period of the augmentation information is started is executed for the identified augmentation information.

Specifically, the second time point tB can be identified using the following Expressions.

When the interruption end time point is represented by trep, a cycle of the augmentation information for one frame is represented by tint, and a reception completion time point of the previous augmentation information is represented by told, minimum P is first obtained by the following Expression. Note that, as described above, the interruption end time point and the cycle of the augmentation information frame are known.

$$[\text{Mathematical Formula 1}]$$

$$trep < told + tint \times P$$

Next, the second time point tB is obtained by the following Expression.

$$[\text{Mathematical Formula 2}]$$

$$tB = told + tint \times P$$

When the positioning method switching unit 104 identifies the first time point tA and the second time point tB, the positioning method switching unit 104 executes a process of determining whether or not the second time point tB arrives by the first time point tA (step S106). Moreover, in the case where it is determined that the second time point tB does not arrive by the first time point tA (No in step S106), that is, in a case where it is determined that the second time point tB arrives later than the first time point tA, it is determined that a period in which any one of the items of augmentation information sequentially received by the positioning device 2 is unusable occurs, and an instruction to cause the positioning device 2 to execute a process of switching the positioning method of the positioning device 2 from the first positioning method to the second positioning method in advance is output to the positioning device 2 (step S107). On the other hand, in the case where it is determined that the second time point tB arrives by the first time point tA (Yes in step S106), it is determined that continuousness of validity periods of a plurality of respective items of augmentation information can be secured, and an instruction to cause the positioning device 2 to execute a process of maintaining the first positioning method is output to the positioning device 2 (step S110).

The positioning method switching unit 104 outputs, to the positioning device 2, an instruction to switch the positioning method from the first positioning method to the second positioning method to be suitable for the first time point tA. Preferably, the positioning method switching unit 104 starts the pre-processing for performing switching to the second positioning method such as establishment of a communication link at a timing before the first time point tA, and as soon as the pre-processing is completed, outputs, to the positioning device 2, an instruction to perform the switching to the second positioning method before the first time point tA arrives.

The positioning method switching unit 104 outputs, to the positioning device 2 at the timing of the second time point tB, an instruction to return the positioning method from the second positioning method to the first positioning method (step S108). The positioning method switching unit 104 outputs, to the positioning device 2, an instruction to cause the positioning device 2 to execute a process of disconnecting the communication link and the like used for the second positioning method after the positioning method returns to the first positioning method from the second positioning method (step S109).

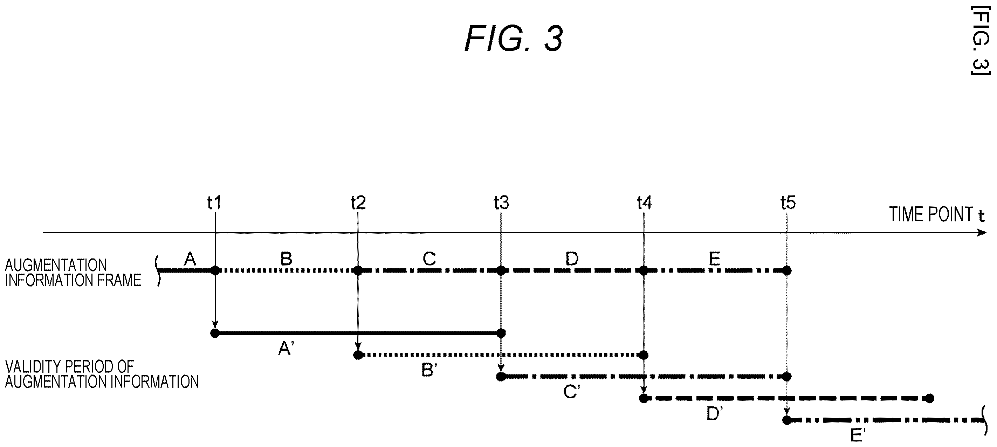

FIG.3 is a diagram illustrating a relationship between the individual frames of the items of augmentation information and the validity periods of the items of augmentation information according to the present embodiment. Time points t1, t2, t3, t4, and t5 illustrated in FIG.3 are divisions at regular time intervals, and although not illustrated, the valid period continues without interruption after t5 during operation of the self-position acquisition device 1 according to the present embodiment.

The specific positioning satellites sequentially transmit items of unique augmentation information different from each other at predetermined time intervals. The individual items of augmentation information are transmitted continuously without any discontinuity between the items. The items of augmentation information have the same constant frame length as each other, and frame reception times taken for the positioning device 2 to receive one frame are also the same length as each other. For example, in the present embodiment, as illustrated in FIG.3, the positioning device 2 continuously receives augmentation information A, B, C, D, and E from a specific positioning satellite and continuously receives the augmentation information without interruption even after the augmentation information E although not particularly illustrated. When the reception of the preceding augmentation information is completed, the positioning device 2 starts to continuously receive the next augmentation information. In an example illustrated in FIG.3, when reception of the augmentation information A is completed at the time point t1, reception of the augmentation information B is started at the same time point t1.

Regarding the augmentation information, a validity period of augmentation information is started from a time point at which reception of the augmentation information for one frame is completed. A length of the validity period of the augmentation information is set such that a validity period of a certain item of augmentation information partially overlaps a validity period of the next augmentation information. For example, in the present embodiment, the validity period of the augmentation information is set to a length twice as long as a frame reception time in which one frame is received, and in the case of the augmentation information in which one frame is continuously and normally received by the positioning device 2, the validity period of the augmentation information is a period from a time point at which the reception is completed to a time point ahead by a frame reception time for two frames.

In the example illustrated in FIG.3, a latter half of a validity period A' of the augmentation information A and a former half of a validity period B' of the augmentation information B overlap each other. The validity period A' of the augmentation information A is a time from the time point t1 to the time point t3, and the validity period B' of the next augmentation information B is a time from the time point t2 to the time point t4. The self-position acquisition device 1 uses the next augmentation information, which is fresher information, for a portion where the validity period of the augmentation information overlaps the validity period of the next augmentation information, on the assumption that reception of all items of augmentation information has been completed.

In the example illustrated in FIG.3, no interruption period is provided, and the period in which the augmentation information is unusable does not occur. Hence, an instruction to switch the positioning method is not output from the positioning method switching unit 104, and the first positioning method is maintained as the positioning method of the positioning device 2.

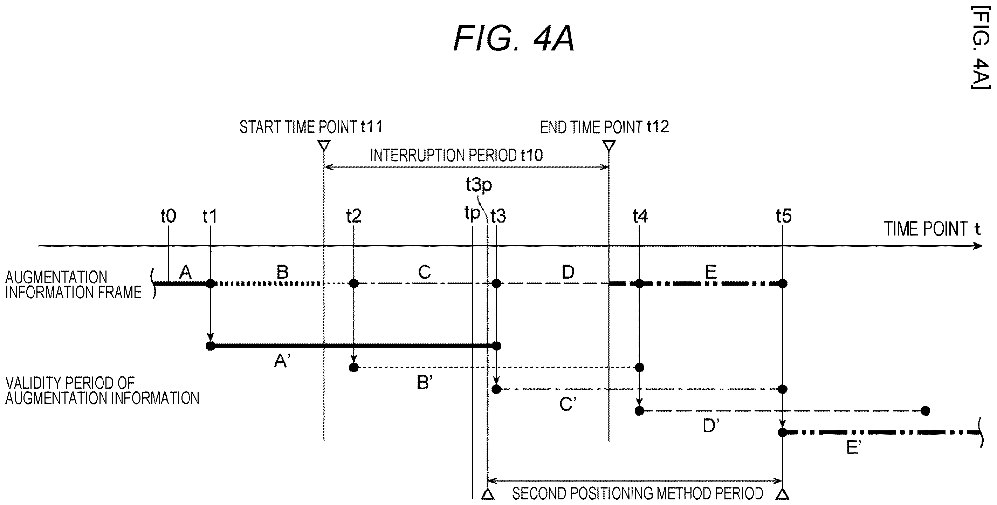

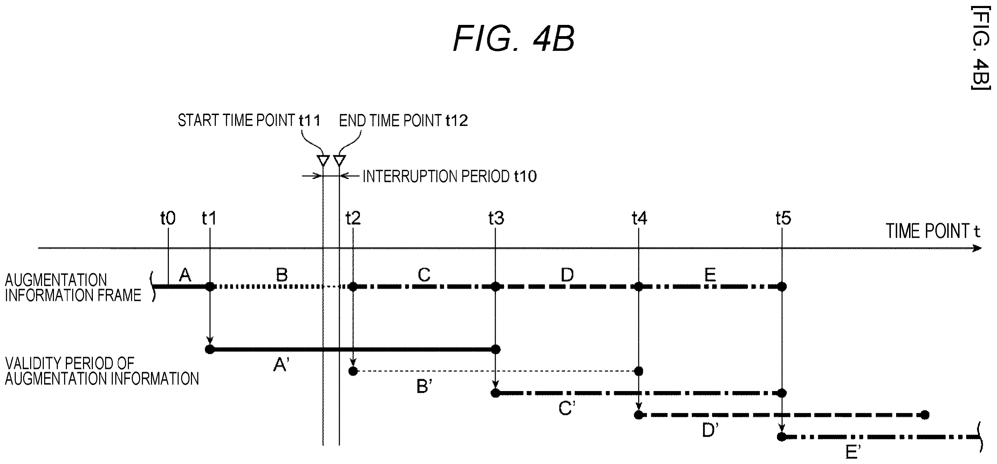

FIGS. 4A and 4B are diagrams illustrating respective chronological orders of states of the validity periods of the items of augmentation information in a case where reception of the items of augmentation information is interrupted according to the present embodiment.

A (1) case of a pattern for performing switching to the second positioning method and (2) operation of a pattern for maintaining the first positioning method of the positioning method switching unit 104 according to the present embodiment will be described below in detail with reference to FIGS. 4A and 4B.

(1) Pattern for Performing Switching to Second Positioning Method

In an example illustrated in FIG.4A, an interruption period t10 starts in the middle of reception of the augmentation information B, and the interruption period t10 ends in the middle of reception of the augmentation information D. Hence, the positioning device 2 cannot use the augmentation information B, C, and D and can use the augmentation information E from the reception completion time point t5 of the augmentation information E that has started to be received after the interruption period t10 ends. This results in the occurrence of a period in which the augmentation information is unusable from the time point t3 at which the validity period A' of the augmentation information A ends to the time point t5 at which use of the augmentation information E can be started.

In the example illustrated in FIG.4A, the positioning method switching unit 104 determines that the interruption period t10 is present, and identifies the augmentation information A, reception of which is completed before a start time point t11 of the interruption period. Moreover, the time point t3 at which the validity period of the identified augmentation information A ends is identified as the first time point tA. Next, the augmentation information E, reception of which is started after an end time point t12 of the interruption period t10, is identified, and the validity period start time point t5 of the augmentation information E is identified as the second time point tB. Moreover, since the second time point tB (the time point t5) does not arrive by the first time point tA (the time point t3), the positioning method switching unit 104 determines that a period in which any one of the items of augmentation information sequentially received by the positioning device 2 is unusable occurs, and outputs, to the positioning device 2, an instruction to switch the positioning method of the positioning device 2 from the first positioning method to the second positioning method in advance.

This causes the positioning device 2 to switch the positioning method from the first positioning method to the second positioning method at a time point t3p before the first time point tA (the time point t3) arrives, and to perform positioning by the second positioning method until the second time point tB (the time point t5).

Preferably, the positioning device 2 performs the pre-processing (such as establishment of the communication link) for performing the switching to the second positioning method in response to an instruction from the positioning method switching unit 104 at a time point tp, which is a timing before the first time point tA (the time point t3).

In addition, the positioning method switching unit 104 outputs, to the positioning device 2, the instruction to return the positioning method of the positioning device 2 from the second positioning method to the first positioning method since the items of augmentation information are usable in a period from the second time point tB (the time point t5) .

This causes the positioning device 2 to switch the positioning method from the second positioning method to the first positioning method at the second time point tB (the time point t5), and to perform positioning by the first positioning method from the second time point tB (the time point t5).

(2) Pattern of Maintaining First Positioning Method

In an example illustrated in FIG.4B, an interruption period t10 starts in the middle of reception of the augmentation information B, and the interruption period t10 ends in the middle of reception of the augmentation information B. Hence, the positioning device 2 cannot use the augmentation information B and can use the augmentation information C from the reception completion time point t3 of the augmentation information C that has started to be received after the interruption period t10 ends. Consequently, both the time point at which the validity period A' of the augmentation information A ends and the time point at which the use of the augmentation information C can be started become the time point t3.

In the example illustrated in FIG.4B, the positioning method switching unit 104 determines that the momentary interruption period t10 is present, and identifies the augmentation information A, reception of which is completed before the start time point t11 of the interruption period t10. Moreover, the time point t3 at which the validity period of the identified augmentation information A ends is identified as the first time point tA. Next, the augmentation information C, reception of which is started after the end time point t12 of the interruption period t10, is identified, and the validity period start time point t3 of the augmentation information C is identified as the second time point tB. Moreover, since the second time point tB (the time point t3) arrives by the first time point tA (the time point t3), the positioning method switching unit 104 determines that the continuousness of the validity periods of the plurality of respective items of augmentation information sequentially received by the positioning device 2 can be secured, and an instruction to maintain the first positioning method is output to the positioning device 2. This causes the positioning device 2 to perform the positioning while the first positioning method is maintained.

As described above, the self-position acquisition device 1 according to the present embodiment is installed in the own vehicle and performs the switching between the first positioning method for performing positioning on the basis of reception information of a positioning signal received from a positioning satellite and augmentation information for augmenting the reception information, and a second positioning method for performing positioning on the basis of the reception information and positioning assistance information received from a positioning server over a network. The self-position acquisition device 1 according to the present embodiment switches the first positioning method to the second positioning method on the basis of the interruption period in which accuracy decreases in the first positioning method and the validity periods of the items of augmentation information.

The self-position acquisition device 1 (FIG.1) according to the present embodiment switches the first positioning method to the second positioning method on the basis of whether or not it is possible to continuously use items of usable augmentation information before and after the interruption period, that is, whether or not the validity periods of the items of usable augmentation information are continuous before and after the interruption period (S106 in FIG.2). In a case where the validity periods of the items of usable augmentation information are continuous before and after the interruption period (Yes in S106 in FIG.2, and FIGS. 3 and 4B), the self-position acquisition device 1 according to the present embodiment can continuously perform positioning by the first positioning method, thus maintaining the first positioning method without performing the switching from the first positioning method to the second positioning method (S110 in FIG.2). This causes the self-position acquisition device 1 according to the present embodiment to reduce occurrence of useless switching from the first positioning method to the second positioning method. In addition, in a case where the validity periods of the items of usable augmentation information are not continuous before and after the interruption period (No in S106 in FIG.2, and FIG.4A), the self-position acquisition device 1 according to the present embodiment switches the positioning method from the first positioning method to the second positioning method at the timing when the validity period of the items of usable augmentation information ends before the interruption period (S107 in FIG.2), and switches the positioning method from the second positioning method to the first positioning method at a timing when the validity periods of the items of usable augmentation information are started after the interruption period (S108 in FIG.2). This enables the self-position acquisition device 1 according to the present embodiment to maintain highly accurate self-position acquisition without deteriorating the positioning accuracy, and can prevent unnecessary cost such as a communication fee by the second positioning method from occurring. Hence, according to the self-position acquisition device 1 according to the present embodiment, it is possible to stably perform highly accurate positioning while minimizing cost.

Further, the self-position acquisition device 1 according to the present embodiment identifies, on the basis of the interruption period and the validity period of the augmentation information, the first time point tA that is the time point at which the validity period of the augmentation information for completing reception earlier than the interruption period ends, and the second time point tB that is the validity period start time point of the augmentation information, reception of which is started after the interruption period ends. The self-position acquisition device 1 according to the present embodiment compares the first time point tA with the second time point tB and switches the first positioning method to the second positioning method.

Since the self-position acquisition device 1 (FIG.1) according to the present embodiment can specifically grasp the validity periods of the items of usable augmentation information before and after the interruption period by identifying the first time point tA and the second time point tB (S104 and S105 in FIG.2), it is possible to accurately grasp a period in which the positioning can be performed (FIGS. 3, 4A, and 4B) by the first positioning method. Additionally, since the self-position acquisition device 1 according to the present embodiment can also accurately grasp a period in which it is not possible to perform the positioning by the first positioning method, the period in which it is not possible to perform the positioning by the first positioning method can be set as a period in which the positioning is performed by the second positioning method (FIG.4A). Consequently, the self-position acquisition device 1 according to the present embodiment is less likely to cause useless switching from the first positioning method to the second positioning method, and it is easy to maintain highly accurate self-position acquisition without decreasing the positioning accuracy. Hence, according to the self-position acquisition device 1 of the present embodiment, it is further possible to stably perform the highly accurate positioning while minimizing cost.

Further, the self-position acquisition device 1 according to the present embodiment maintains the first positioning method in the case where the second time point tB arrives by the first time point tA, and performs the switching to the second positioning method in the case where the second time point tB arrives later than the first time point tA.

The self-position acquisition device 1 (FIG.1) according to the present embodiment specifically illustrates a state in which the validity periods of the items of usable augmentation information are continuous before and after the interruption period by the arrival of the second time point tB before the arrival of the first time point tA (Yes in S106 in FIG.2 and FIGS. 3 and 4B). In addition, the self-position acquisition device 1 according to the present embodiment specifically illustrates a state in which the validity periods of the items of usable augmentation information are not continuous before and after the interruption period by the arrival of the second time point tB later than the arrival of the first time point tA (No in S106 in FIG.2 and FIG. 4A). The self-position acquisition device 1 according to the present embodiment can accurately distinguish between the case of maintaining the first positioning method (S110 in FIG.2) and the case of performing the switching from the first positioning method to the second positioning method (S107 in FIG.2) by specifically indicating a comparison index between the first time point tA and the second time point tB. This makes it easy to reduce the occurrence of useless switching from the first positioning method to the second positioning method. Hence, according to the self-position acquisition device 1 of the present embodiment, it is further possible to stably perform the highly accurate positioning while minimizing cost.

Further, the self-position acquisition device 1 according to the present embodiment sets, as the interruption period, an obstruction period in which the space above the own vehicle is obstructed.

The self-position acquisition device 1 (FIG.1) according to the present embodiment clarifies that the obstacle (the interruption factor) that blocks positioning of the own vehicle is present above the own vehicle. Consequently, the self-position acquisition device 1 according to the present embodiment can capture an appropriate object as the obstacle (the interruption factor), this making it easy to calculate the interruption period (S102 in FIG.2). As a result, the self-position acquisition device 1 according to the present embodiment can easily identify the first time point tA and the second time point tB from the interruption period and the validity periods of the items of augmentation information (S104 and S105 in FIG.2), thus making it easy to determine whether to perform the positioning by the first positioning method or by the second positioning method. Hence, according to the self-position acquisition device 1 of the present embodiment, it is further possible to stably perform the highly accurate positioning while minimizing cost.

In addition, the self-position acquisition device 1 according to the present embodiment can further simplify a recognition target of the outside environment recognition device 3. This enables a velocity at which the interruption factor information can be acquired to be improved, and enables the self-position acquisition device 1 to be constructed by more inexpensive hardware, since a processing load can be reduced.


[Second Embodiment]

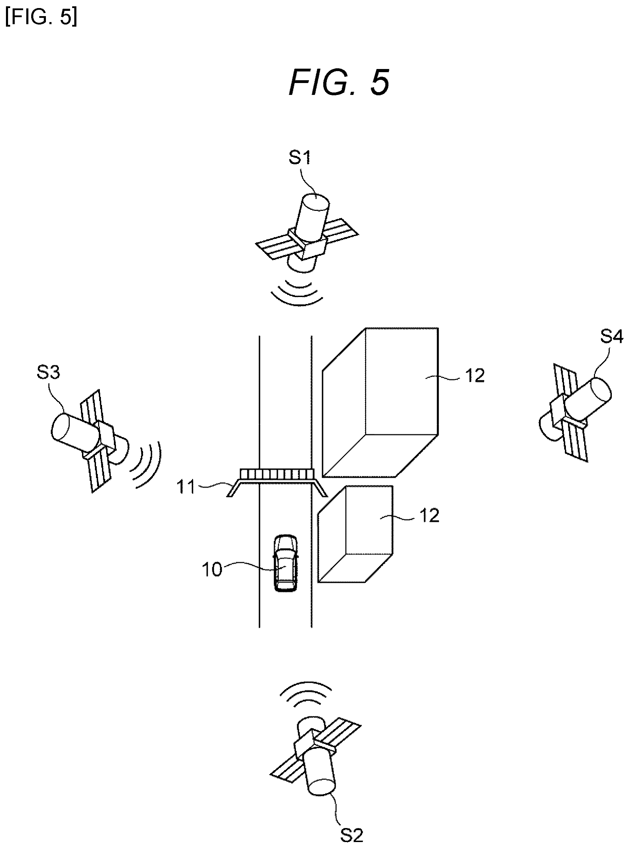

Next, the self-position acquisition device 1 according to a second embodiment will be described with reference to FIGS. 5, 6, and 7. In the self-position acquisition device 1 according to the second embodiment, the descriptions of the same configuration and operation as those of the self-position acquisition device 1 according to the first embodiment will be omitted.

The self-position acquisition device 1 according to the second embodiment differs from the self-position acquisition device 1 according to the first embodiment in that an inside environment recognition device 4, a moving amount calculation unit 111, a state acquisition unit 112, and a calculation method switching unit 113 are further included.

In addition, it has been described that the interruption period calculation unit 102 according to the first embodiment has a function of calculating the interruption period with respect to the target object between the specific positioning satellite that transmits the augmentation information and a receiving antenna. Additionally, the interruption period calculation unit 102 according to the second embodiment may have a function of performing interruption prediction for positioning satellites other than the specific positioning satellite. That is, the interruption period calculation unit 102 according to the second embodiment can acquire elevation angles and azimuth angles from respective positioning satellites from the reception information included in the signal. This enables, similarly to the specific positioning satellite that transmits the augmentation information, the interruption period calculation unit 102 according to the second embodiment to individually calculate the interruption periods for positioning satellites other than the specific positioning satellite.

In the case of no interruption, the self-position acquisition device 1 according to the first embodiment acquires the self-location of the vehicle by the first positioning method. On the other hand, within the interruption period, the self-position acquisition device 1 according to the first embodiment compares the first time point tA with the second time point tB and acquires the self-position of the vehicle by the second positioning method in the case where the second time point tB arrives later than the first time point tA. In this case, the self-position of the vehicle is acquired by the position acquisition unit 101 as a self-position estimated by interpolating an own vehicle moving amount with respect to a past positioning result. Thus, there is a possibility that the acquisition of the self-position within the interruption period may be less accurate than in a case where the self-position is not interrupted even when the second positioning method is used.

Therefore, the self-position acquisition device 1 according to the second embodiment solves the above-described problem by calculating an own vehicle moving amount for estimating the self-position of the vehicle within the interruption period on the basis of satellite positioning by using positioning satellites that are not yet interrupted or on the basis of a wheel odometry method.

How the self-position acquisition device 1 according to the second embodiment calculates the own vehicle moving amount for estimating the self-position of the vehicle will be described below.

The self-position acquisition device 1 according to the second embodiment calculates the own vehicle moving amount on the basis of the positioning satellites that are not yet interrupted on the assumption that the interruption period calculation unit 102 can calculate the interruption periods of the individual positioning satellites individually and that the position acquisition unit 101 can recognize a future travel route of the own vehicle. This calculation method is referred to as a first calculation method. As the first calculation method, a positioning satellite that can be observed, still has a time to the interruption period, and conforms to an orientation of the own vehicle is selected, and the own vehicle moving amount is calculated based on the selected positioning satellite. As the positioning satellite to be selected, among the positioning satellites that can be observed, a positioning satellite that has a time of longer than or equal to a predetermined value Tthr to the start of the interruption and that has an own vehicle travel orientation Dvehicle and an azimuth angle Dsat of the positioning satellite based on a travel route which are within a predetermined range Dthr is selected. That is, as the positioning satellite to be selected, it is preferable to select a positioning satellite that has an angle within ±Dthr/2 with respect to a traveling direction, that is, that has an orientation in a front-rear direction of the traveling direction, as represented in the following Mathematical Expression 3, and it is more preferable to select a positioning satellite having an angle within Dthr/2 with respect to the traveling direction, that is, being on a rear side in the traveling direction, as represented in the following Mathematical Expression 4. Here, "%" means a remainder symbol.

[Mathematical Formula 3]

$$|Dvehicle-Dsat|\%180<Dthr$$

[Mathematical Formula 4]

$$Dvehicle-Dsat\%180<Dthr$$

As the first calculation method, for example, it is preferable to use a known method of calculating a velocity between one specific positioning satellite and the own vehicle (an observer), such as a calculation method based on the Doppler shift or a calculation method based on a carrier wave phase difference. In addition, as the first calculation method, in order to stably obtain the velocity even when signals from some satellites have multipaths, the velocity between a large number of observable satellites and the own vehicle may be calculated, and the velocity of the own vehicle and a moving orientation may be calculated using least squares of a plurality of calculated results.

FIG.5 is an illustrative view related to selection of a positioning satellite when the own vehicle moving amount is calculated on the basis of the positioning satellite.

A method for calculating the first calculation method will be schematically described with reference to FIG.5. It is assumed that positioning satellites S1 to S4 are present around an own vehicle 10 in an environment in which the own vehicle 10 is traveling upward in the drawing, a pedestrian footbridge 11 is present on a front side, and a building 12 is present on a right side. Here, a positioning satellite selected when the velocity of the own vehicle is calculated using either the method based on the Doppler shift or the method based on the carrier wave phase difference will be described. From the viewpoint that a positioning satellite needs to be observable from the own vehicle 10, the positioning satellite S4 is excluded from selection candidates since the positioning satellite S4 is interrupted by the building 12. Since there is a possibility that the positioning satellite S1 to be interrupted in the near future may not satisfy a constraint that a time to the start of interruption is longer than or equal to the Tthr, the positioning satellite S1 is excluded from the selection candidates. Since there is a possibility that the positioning satellite S3 does not satisfy a constraint that an own vehicle traveling orientation and an azimuth angle of the positioning satellite are within Dthr, the positioning satellite S3 is excluded from the selection candidates. The positioning satellite S2 present behind the own vehicle 10 in the traveling direction satisfies all of the constraints described above. Hence, in the first calculation method, it is possible to obtain a highly accurate velocity by calculating the velocity of the own vehicle on the basis of the positioning satellite S2. Here, an example in which only one satellite is used has been described. However, in a case where there is a plurality of positioning satellites satisfying the condition, the velocity may be calculated by a least squares method or the like using the positioning satellites.

In a case where there is no positioning satellite satisfying the conditions described above, the own vehicle moving amount is calculated on the basis of a known wheel odometry method of estimating the relative movement of the own vehicle from a steering angle of the vehicle and a rotation amount of a tire. This calculation method is referred to as a second calculation method.

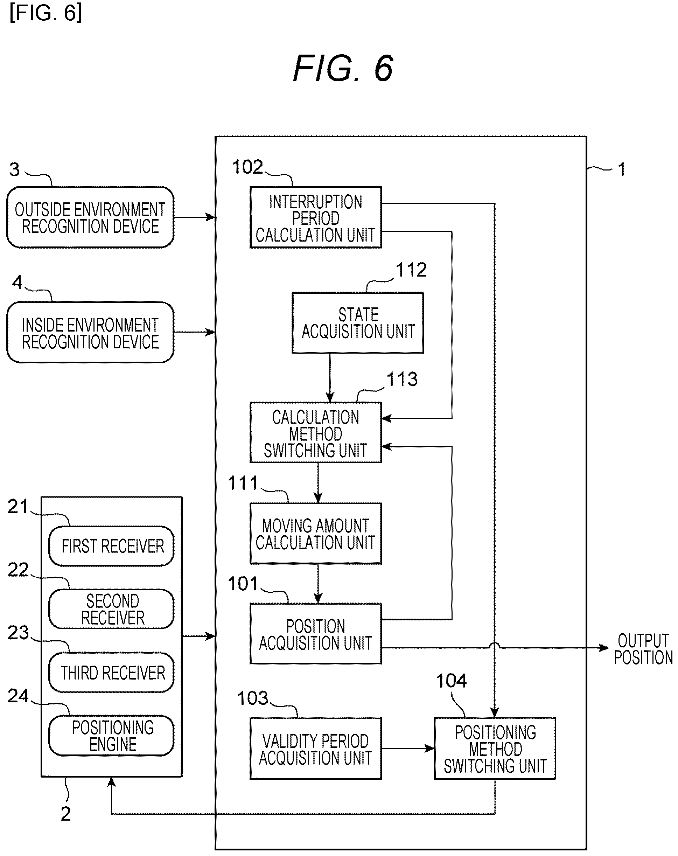

FIG.6 is a block diagram illustrating the self-position acquisition device 1 according to the second embodiment.

As illustrated in FIG.6, the inside environment recognition device 4 is connected to the self-position acquisition device 1 according to the second embodiment. In addition, as illustrated in FIG.6, the self-position acquisition device 1 according to the second embodiment includes a moving amount calculation unit 111, a state acquisition unit 112, and a calculation method switching unit 113.

The inside environment recognition device 4 is installed in the own vehicle and measures behavior of the own vehicle. As the inside environment recognition device 4, sensors that measure the velocity of the own vehicle such as a millimeter wave Radar, a wheel speed pulse sensor, an acceleration sensor, and an angular velocity sensor, and sensor devices that measure a posture of the own vehicle, such as an electronic stability control (ESC) and an inertial measurement unit (IMU) are intentionally used. The inside environment recognition device 4 may be provided outside the self-position acquisition device 1 or may be provided in the self-position acquisition device 1. The inside environment recognition device 4 transmits acquired information regarding behavior of the own vehicle (hereinafter, also referred to as own vehicle behavior information) to the self-position acquisition device 1.

The moving amount calculation unit 111 calculates the own vehicle moving amount by using one calculation method of the first calculation method based on a positioning satellite and the second calculation method based on the wheel odometry method. The vehicle behavior information obtained from the inside environment recognition device 4 is used to perform the wheel odometry method.

The state acquisition unit 112 acquires the vehicle behavior information transmitted from the inside environment recognition device 4. The state acquisition unit 112 determines an accuracy state of the wheel odometry method on the basis of the own vehicle behavior information. As the accuracy state of the wheel odometry method, it is determined that the accuracy state of the wheel odometry method is a good state in the case of no rapid change in the tire torque within a predetermined time. On the other hand, in a case where the tire torque rapidly changes over a plurality of times within a predetermined time or in a case where the tire torque decreases more than usual for the predetermined time, it is estimated that a road surface is uneven in many parts or the road surface is slippery, and it is determined that the accuracy state of the wheel odometry method is not good. The state acquisition unit 112 transmits information of the determined accuracy state of the wheel odometry to the calculation method switching unit 113.

As the determination example described above, a momentary change in the tire torque is observed in the electronic stability control, or the acceleration sensor or the vehicle velocity sensor detects unevenness of the road surface, and the state acquisition unit 112 determines that the accuracy state of the wheel odometry method is not good on the basis of the detection result. For example, an output of the wheel speed pulse sensor and ground speed information by the millimeter wave Radar may be collated, and the state acquisition unit 112 may determine the accuracy state of the wheel odometry method on the basis of consistency between these different types of sensors. Similarly, the state acquisition unit 112 may determine the accuracy state of the wheel odometry method on the basis of consistency between an own vehicle moving amount and an angle change amount obtained from an integrated value of sensor outputs of the inertial measurement unit and an own vehicle moving amount and an angle change amount obtained from the wheel speed pulse sensor and the steering angle sensor.

The calculation method switching unit 113 switches the calculation method to an own vehicle moving amount calculation method in accordance with a current state of the own vehicle on the basis of information on the accuracy state of the wheel odometry method acquired from the state acquisition unit 112 and information such as elevation angles and azimuths of the individual positioning satellites obtained from the interruption period calculation unit 102 according to the second embodiment. In other words, the calculation method switching unit 113 performs the switching to either the first calculation method or the second calculation method in consideration of accuracy of the wheel odometry method and a degree of interruption.

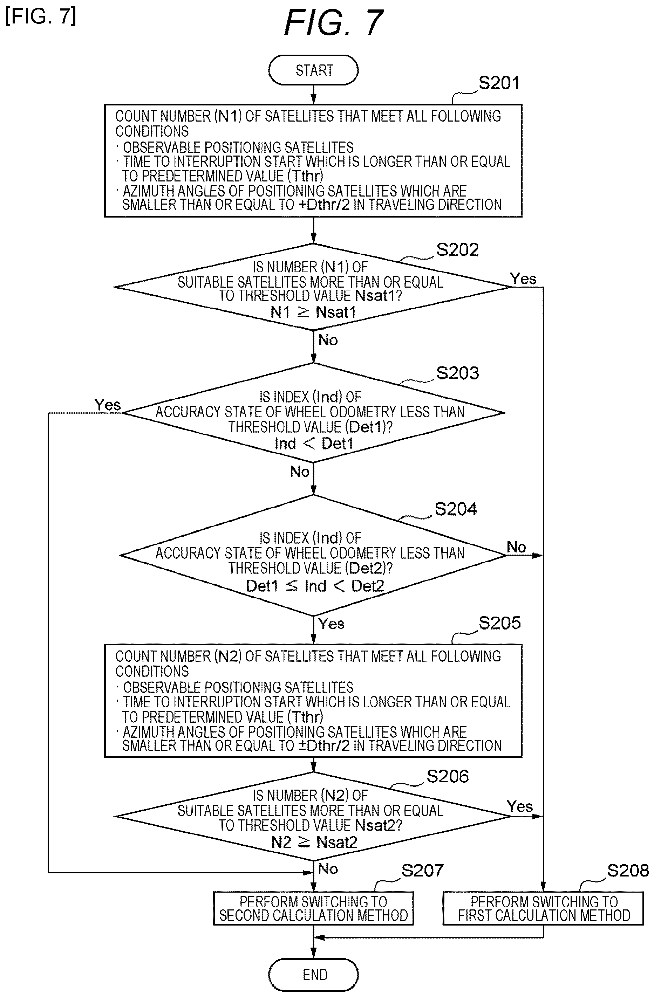

FIG.7 is a flowchart illustrating an example of a determination process in switching of an own vehicle moving amount calculation method by the calculation method switching unit 113 illustrated in FIG.6.

As illustrated in FIG.7, the determination process in the switching of the own vehicle moving amount calculation method by the calculation method switching unit 113 is roughly as follows.

First, the calculation method switching unit 113 determines whether a predetermined number of positioning satellites that can be used in calculation of the own vehicle moving amount are present on the rear side in an own vehicle traveling direction. In the case where the predetermined number of positioning satellites that can be used in calculation of the own vehicle moving amount are present on the rear side in the own vehicle traveling direction, the calculation method switching unit 113 switches the calculation method to the first calculation method.

In the case where the predetermined number of positioning satellites that can be used in calculation of the own vehicle moving amount are not present on the rear side in the own vehicle traveling direction, the calculation method switching unit 113 then determines whether the accuracy state of the wheel odometry method is good. In the case where the accuracy state of the wheel odometry method is good, the calculation method switching unit 113 switches the calculation method to the second calculation method.

In the case where the accuracy state of the wheel odometry method is not good, the calculation method switching unit 113 then switches the calculation method to the first calculation method.

In a case where the accuracy state of the wheel odometry method is a state in which the own vehicle moving amount can be calculated by the second calculation method, the calculation method switching unit 113 then determines whether the predetermined number of positioning satellites that can be used in the calculation of the own vehicle moving amount are present in the front-rear direction of the own vehicle traveling directions. In the case where the predetermined number of positioning satellites that can be used in the calculation of the own vehicle moving amount are present in the front-rear direction of the own vehicle traveling directions, the calculation method switching unit 113 switches the calculation method to the first calculation method. In the case where the predetermined number of positioning satellites that can be used in the calculation of the own vehicle moving amount are not present in the front-rear direction of the own vehicle traveling directions, the calculation method switching unit 113 switches the calculation method to the second calculation method.

The determination process in the switching of the own vehicle moving amount calculation method by the calculation method switching unit 113 is specifically as follows.

The calculation method switching unit 113 counts the number N1 of positioning satellites that meet all the following conditions (a) to (c) (step S201).

(a) To be observable from the own vehicle.
(b) To have a time longer than or equal to a predetermined value Tthr until the start of the interruption.
(c) To have an azimuth angle within Dthr/2 with respect to the own vehicle traveling direction.

The calculation method switching unit 113 determines whether the number N1 of positioning satellites counted in step S201 is larger than or equal to a predetermined first threshold value Nsat1 (step S202). Note that the larger the numerical value of the counted number N1 of positioning satellites, the higher the accuracy of the calculated own vehicle moving amount. In a case where the number N1 of positioning satellites is less than the predetermined first threshold value Nsat1 (No in step S202), the calculation method switching unit 113 proceeds to step S203. In a case where the number N1 of positioning satellites is larger than or equal to the predetermined first threshold value Nsat1 (Yes in step S202), the calculation method switching unit 113 proceeds to step S208.

The calculation method switching unit 113 determines whether an index Ind of the accuracy state of the wheel odometry method acquired from the state acquisition unit 112 is less than a predetermined first threshold value Det1 (step S203). Note that it can be reported that the smaller the numerical value of the index Ind of the accuracy state of the wheel odometry method, the better the accuracy state of the wheel odometry method. In a case where the index Ind of the accuracy state of the wheel odometry method is less than the predetermined first threshold value Det1 (Yes in step S203), the calculation method switching unit 113 proceeds to step S207. In a case where the index Ind of the accuracy state of the wheel odometry method is larger than or equal to the predetermined first threshold value Det1 (No in step S203), the calculation method switching unit 113 proceeds to step S204.

The calculation method switching unit 113 determines whether the index Ind of the accuracy state of the wheel odometry method acquired from the state acquisition unit 112 is less than a predetermined second threshold value Det2 (step S204). Note that the index Ind of the accuracy state of the wheel odometry method in step S204 is the same as the index Ind of the accuracy state of the wheel odometry method in step S203. Hence, the index Ind of the accuracy state of the wheel odometry method is larger than or equal to the predetermined first threshold value Det1. In a case where the index Ind of the accuracy state of the wheel odometry method is less than the predetermined second threshold value Det2 (Yes in step S204), the calculation method switching unit 113 proceeds to step S205. In a case where the index Ind of the accuracy state of the wheel odometry method is larger than or equal to the predetermined second threshold value Det2 (No in step S204), the calculation method switching unit 113 proceeds to step S208. Note that, the predetermined second threshold value Det2 is a threshold value on whether the accuracy state of the wheel odometry method enables the own vehicle moving amount to be calculable by the second calculation method.

The calculation method switching unit 113 counts a number N2 of positioning satellites that meet all the following conditions (a), (b), and (d) (step S205).

(a) To be observable from the own vehicle.
(b) To have a time longer than or equal to a predetermined value Tthr until the start of the interruption.
(d) To have an azimuth angle within ±Dthr/2 with respect to the own vehicle traveling direction.

The calculation method switching unit 113 determines whether the number N2 of positioning satellites counted in step S205 is larger than or equal to the predetermined second threshold value Nsat2 (step S206). Note that the larger the numerical value of the counted number N2 of positioning satellites, the higher the accuracy of the calculated own vehicle moving amount. In a case where the number N2 of positioning satellites is less than the predetermined second threshold value Nsat2 (No in step S206), the calculation method switching unit 113 proceeds to step S207. In a case where the number N2 of positioning satellites is larger than or equal to the predetermined second threshold value Nsat2 (Yes in step S206), the calculation method switching unit 113 proceeds to step S208.

In a case where the index Ind of the accuracy state of the wheel odometry method is less than the predetermined first threshold value Det1 (Yes in step S203) or in a case where the number N2 of positioning satellites is less than the predetermined second threshold value Nsat2 (No in step S206), the calculation method switching unit 113 switches the calculation method to the second calculation method (step S207).

In a case where the number N1 of positioning satellites is larger than or equal to the predetermined first threshold value Nsat1 (Yes in step S202), in a case where the index Ind of the accuracy state of the wheel odometry method is larger than or equal to the predetermined second threshold value Det2 (No in step S204), or in a case where the number N2 of positioning satellites is larger than or equal to the predetermined second threshold value Nsat2 (Yes in step S206), the calculation method switching unit 113 switches the calculation method to the first calculation method (step S208).

Note that, in steps S203 and S204, the numerical values of the first threshold value Det1 and the second threshold value Det2 defined as comparison targets with respect to the index Ind of the accuracy state of the wheel odometry method can be changed. Specifically, before the inside environment recognition device 4 performs detection, the outside environment recognition device 3 measures a road surface condition and transmits information of the measured road surface condition to the self-position acquisition device 1. The calculation method switching unit 113 predicts a future accuracy state of the wheel odometry method on the basis of the information of the road surface condition transmitted from the outside environment recognition device 3. In a case where the calculation method switching unit 113 determines that the future accuracy state of the wheel odometry method may become an unsatisfactory state, the calculation method switching unit 113 changes the numerical values of the first threshold value Det1 and the second threshold value Det2 to smaller numbers.

As described above, the self-position acquisition device 1 according to the second embodiment acquires information about the accuracy state of the wheel odometry method by the inside environment recognition device 4 installed in the own vehicle, in accordance with the following Mathematical Expression 5 regarding the number of positioning satellites and the following Mathematical Expression 6 regarding the accuracy state of the wheel odometry method, as a calculation method for calculating the moving amount of the vehicle for estimating the self-position within the inhibition period, switching to the first calculation method for calculating the moving amount of a vehicle based on the positioning satellites in a case where Mathematical Expression 5 is established; and in a case where Mathematical Expression 5 is not established or Mathematical Expression 6 is established, switching to the second calculation method for calculating the moving amount of a vehicle is performed based on the wheel odometry method.

[Mathematical Formula 5]

$$N1 \geq Nsat1$$

N1: the number of satellites that meet all of the following conditions of
observable positioning satellites,
a time to an inhibition start which is longer than or equal to a predetermined value (Tthr), and
positioning satellites having the following relationship between an own vehicle travel orientation (Dvehicle) based on a travel route, an azimuth angle (Dsat) of each of the positioning satellites, and Dthr within a predetermined range,

$$Dvehicle-Dsat\%180<Dthr$$

here, "%" means a remainder symbol, and
Nsat1: predetermined first threshold value regarding the number of satellites

[Mathematical Formula 6]

$$Ind<Det1$$

Ind: index of accuracy state of wheel odometry method
Det1: predetermined first threshold value regarding accuracy state of wheel odometry method

The self-position acquisition device 1 (FIG.6) according to the second embodiment can accurately calculate the own vehicle moving amount for estimating the self position of the vehicle on the basis of any appropriate one of the observable positioning satellites (S2 in FIG.5) and the wheel odometry method by Mathematical Expression 5 (S201 and S202 in FIG.7) and Mathematical Expression 6 (S203 in FIG.7) described above by using a known measurement device and a known measurement method within the interruption period (S207 in FIG.7 or S208 in 7). This enables the self-position acquisition device 1 according to the second embodiment to acquire the self-position with high accuracy by interpolating the own vehicle moving amount calculated with respect to the positioning result calculated in the past even within the interruption period. Hence, according to the self-position acquisition device 1 of the present embodiment, it is further possible to stably perform the highly accurate positioning while minimizing cost.

Further, in a case where Mathematical Expression 5 and Mathematical Expression 6 described above are not established, the self-position acquisition device 1 according to the second embodiment performs the switching to the second calculation method in a case where the following Mathematical Expression 7 is established in accordance with Mathematical Expression 7 regarding the accuracy state of the wheel odometry method and the following Mathematical Expression 8 regarding the number of positioning satellites, and performs the switching to the first calculation method in a case where Mathematical Expression 7 is not established, or Mathematical Expression 8 is established.

[Mathematical Formula 7]

$$Det1 \leq Ind < Det2$$

Ind: index of accuracy state of wheel odometry method
Det1: predetermined first threshold value regarding accuracy state of wheel odometry method
Det2: predetermined second threshold value regarding accuracy state of wheel odometry method

[Mathematical Formula 8]

$$N2 \geq Nsat2$$

N2: the number of satellites that meet all of the following conditions of
observable positioning satellites,
a time to an inhibition start which is longer than or equal to a predetermined value (Tthr), and
positioning satellites having the following relationship between an own vehicle travel orientation (Dvehicle) based on a travel route, an azimuth angle (Dsat) of each of the positioning satellites, and Dthr within a predetermined range,

$$|Dvehicle-Dsat|\%180<Dthr$$

here, "%" means a remainder symbol, and
Nsat2: predetermined second threshold value regarding the number of satellites

The self-position acquisition device 1 (FIG. 6) according to the second embodiment can calculate the own vehicle moving amount for estimating the self-position of the vehicle on the basis of any appropriate one of the observable positioning satellites and the wheel odometry method by Mathematical Expression 7 (S204 in FIG.7) and Mathematical Expression 8 (S205 and S206 in FIG.7) having more increase in allowable range than Mathematical Expression 5 (S201 and S202 in FIG.7) and Mathematical Expression 6 (S203 in FIG.7) by using a known measurement device and a known measurement method within the interruption period (S207 or in FIG.7 or S208 in 7). This enables the self-position acquisition device 1 according to the second embodiment to easily acquire the self-position with high accuracy by interpolating the own vehicle moving amount calculated with respect to the positioning result calculated in the past even within the interruption period. Hence, according to the self-position acquisition device 1 of the present embodiment, it is further possible to stably perform the highly accurate positioning while minimizing cost.

Further, the self-position acquisition device 1 according to the second embodiment changes the predetermined first threshold value related to the accuracy state of the wheel odometry method on the basis of a road surface condition obtained by the outside environment recognition device 3 installed in the own vehicle.

In the self-position acquisition device 1 (FIG. 6) according to the second embodiment, the calculation method switching unit 113 determines in advance that the accuracy state of the wheel odometry method can become an unsatisfactory state within the interruption period, on the basis of the information of the road surface condition measured by the outside environment recognition device 3, and adjusts the predetermined first threshold value (S203 in FIG. 7) related to the accuracy state of the wheel odometry method to become smaller. This causes the self-position acquisition device 1 according to the second embodiment to preferentially use the first calculation method (S208 in FIG.7) as the calculation method. As a result, the self-position acquisition device 1 according to the second embodiment can improve a determination velocity related to the calculation method, and makes it easy to acquire the self-position with high accuracy by using the known measurement device and the known measurement method. Hence, according to the self-position acquisition device 1 of the present embodiment, it is further possible to stably perform the highly accurate positioning while minimizing cost.

[Third Embodiment]

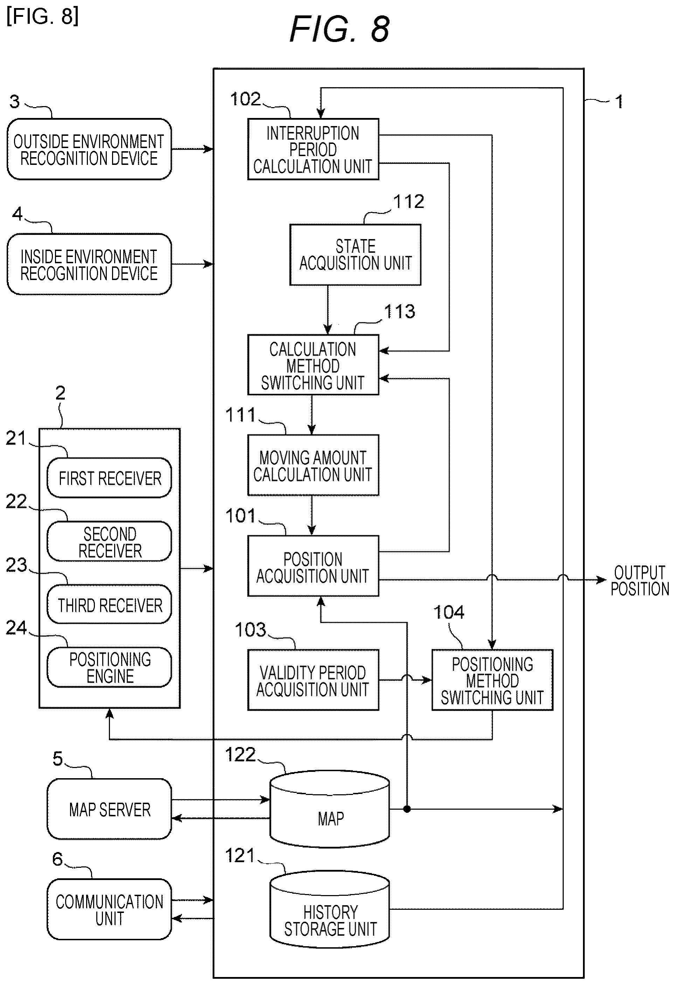

Next, a self-position acquisition device 1 according to a third embodiment will be described with reference to FIG.8. In the self-position acquisition device 1 according to the third embodiment, the descriptions of the same configuration and operation as those of the self-position acquisition device 1 according to the first embodiment and the second embodiment will be omitted.

The self-position acquisition device 1 according to the third embodiment differs from the self-position acquisition devices 1 according to the first embodiment and the second embodiment in that the self-position acquisition device 1 further includes a history storage unit 121 and a map 122, can communicate with a map server 5, and is further connected to a communication unit 6. The self-position acquisition devices 1 according to the first embodiment and the second embodiment is operated by the own vehicle alone and performs the same operation in the same environment, but the self-position acquisition device 1 according to the third embodiment is different in that the self-position acquisition device 1 keeps a record if necessary and communicates with the outside.

FIG.8 is a block diagram illustrating the self-position acquisition device 1 according to the third embodiment.

As illustrated in FIG.8, the self-position acquisition device 1 according to the third embodiment includes the history storage unit 121 and the map 122.

The history storage unit 121 stores any one or more of the interruption period and the validity period of the augmentation information as the past history. The history storage unit 121 transmits the stored past history to the interruption period calculation unit 102.

The map 122 is a database which includes surrounding target object information at each point and in which an obstacle with little change such as a building or an artificial structure may be recorded in advance. The map 122 may be one function of a known car navigation system installed in a vehicle, for example. The position acquisition unit 101, the interruption period calculation unit 102, and the calculation method switching unit 113 can use information included in the map 122.

For example, the position acquisition unit 101 may predict a traveling route of the own vehicle on the basis of the road information included in the map 122 by inserting the acquired self-position into the map 122. In addition, the interruption period calculation unit 102 may acquire target object information from the map 122. In addition, the calculation method switching unit 113 may acquire, from the map 122 in advance, a point at which the interruption may occur, and change the predetermined threshold value related to the number of satellites so that the second calculation method is used in preference to the first calculation method in the vicinity of the acquired point. Specifically, the values of the first threshold value Nsat1 and the second threshold value Nsat2 are set to be larger with respect to the number N1 and N2 of positioning satellites that meet the conditions. In addition, the second threshold value Det2 for the index Ind of the accuracy state of the wheel odometry method is further increased. According to any one or both of the above, the second calculation method is used in preference to the first calculation method.

There is a concern that details of the map 122 will become old due to a temporal change, and discrepancy from an actual environmental structure will occur. In order to cope with this problem, the self-position acquisition device 1 according to the third embodiment may be connectable to the map server 5 provided outside. The map 122 may communicate with the map server 5 or exchange information using a recording medium or the like to update information of a building or the like included therein.

As illustrated in FIG.8, the communication unit 6 is connected to the self-position acquisition device 1 according to the third embodiment.

The communication unit 6 is installed in the own vehicle and communicates with one or more of another vehicle, road equipment, and a facility. The communication unit 6 is preferably a device having a known V2X communication function.

The connected communication unit 6 connected to the self-position acquisition device 1 according to the third embodiment communicates with any one or more of another vehicle, road equipment, and a facility, and receives information acquired by a party other than the own vehicle, which is any one or more items of target object information observed by the party other than the own vehicle, a road surface slippage situation, and details recorded as a history. The self-position acquisition device 1 according to the third embodiment connected to the communication unit 6 may determine any one or more of the interruption period and the validity period of the augmentation information on the basis of the information received by the communication unit 6.

As described above, the self-position acquisition device 1 according to the third embodiment stores, as the past history, any one or more of the interruption period and the validity period of the augmentation information.

The self-position acquisition device 1 (FIG.8) according to the third embodiment can store, in the history storage unit 121, the interruption period and the validity period of the augmentation information acquired in the past, and can calculate, by referring to the interruption period and the validity period of the augmentation information as the past history, the interruption period, the first time point tA, and the second time point tB at a position different from the current position of the own vehicle that cannot be originally calculated. This enables the self-position acquisition device 1 according to the third embodiment to improve the accuracy of positioning and also to determine the switching of the positioning method in advance. Additionally, the self-position acquisition device 1 according to the third embodiment can prevent the cost such as the communication fee from being recharged in a case where the referred past history is the past history when the positioning is performed by the second positioning method. Hence, according to the self-position acquisition device 1 of the third embodiment, it is further possible to stably perform the highly accurate positioning while minimizing cost.

Further, the self-position acquisition device 1 according to the third embodiment calculates the interruption period using the map.

The self-position acquisition device 1 (FIG.8) according to the third embodiment can easily grasp the interruption start time point, the size of a target object, and the like even with respect to the target object by which continuous interruption occurs for a predetermined time or longer, such as a tunnel, by causing, for example, the map 122 to use one function of a known car navigation system. This enables the self-position acquisition device 1 according to the third embodiment to calculate the interruption period more accurately by using a known function. Hence, according to the self-position acquisition device 1 of the third embodiment, it is further possible to stably perform the highly accurate positioning while minimizing cost.

Further, in the self-position acquisition device 1 according to the third embodiment, the map 122 is updated.

The self-position acquisition device 1 (FIG.8) according to the third embodiment can prevent the map 122 from deteriorating over time. This enables the self-position acquisition device 1 according to the third embodiment to acquire accurate target object information from the map 122 even in a case where the target object changes with elapse of time. As a result, the self-position acquisition device 1 according to the third embodiment can accurately calculate the interruption period even after the lapse of time. Hence, according to the self-position acquisition device 1 of the third embodiment, it is further possible to stably perform the highly accurate positioning while minimizing cost.

Further, in the self-position acquisition device 1 according to the third embodiment, the communication unit 6 installed in the own vehicle calculates the interruption period by using information acquired by a party other than the own vehicle, the information being obtained by performing communication with one or more of another vehicle, road equipment, and a facility, and/or the communication unit acquires the validity period of the augmentation information from augmentation information that is acquired by the party other than the own vehicle, the augmentation information being obtained by performing communication with one or more of the other vehicle, the road equipment, and the facility.

The self-position acquisition device 1 (FIG. 8) according to the third embodiment can acquire the target object information and the augmentation information that cannot be obtained by the own vehicle, by using, as the communication unit 6, for example, a device having the known V2X communication function which communicates with any one or more of another vehicle, road equipment, and a facility. This enables the self-position acquisition device 1 according to the third embodiment to improve the accuracy of positioning, and to also perform switching determination of the positioning method in advance by using the target object information and the augmentation information that cannot be acquired by the own vehicle yet. Hence, according to the self-position acquisition device 1 of the third embodiment, it is further possible to stably perform the highly accurate positioning while minimizing cost.

Note that the present invention is not limited to the above-described embodiments and includes various modification examples. For example, the above-described embodiments have been described in detail in order to describe the present invention in an easy-to-understand manner and are not necessarily limited to those having all the described configurations. In addition, a part of a configuration of a certain embodiment may be replaced with a configuration of another embodiment, or the configuration of the other embodiment may be added to the configuration of the certain embodiment. In addition, it is possible to add, remove, and replace other configurations for a part of the configuration of each embodiment.

In addition, some or all of the above-described configurations, functions, processing units, processing means, and the like may be realized by hardware, for example, by designing those as integrated circuits or the like. In addition, the above-described individual configurations, functions, and the like may be realized by software by a processor interpreting and executing a program for realizing the individual functions. Information such as a program, a tape, and a file for realizing individual functions can be stored in a recording device such as a memory, a hard disk, or a solid state drive (SSD), or a recording medium such as an IC card, an SD card, and a DVD.

In addition, control lines and information lines indicate what is considered to be necessary for the description and do not necessarily indicate all the control lines and the information lines on a product. In practice, it may be considered that almost all of the configurations are connected to each other.


Reference Signs List

| | |
|---|---|
| 1 | self-position acquisition device |
| 2 | positioning device |
| 3 | outside environment recognition device |
| 21 | first receiver |
| 22 | second receiver |
| 23 | third receiver |
| 24 | positioning engine |
| 101 | position acquisition unit |
| 102 | interruption period calculation unit |
| 103 | validity period acquisition unit |
| 104 | positioning method switching unit |

tA     first time point
tB     second time point

**Claims**

1. A self-position acquisition device installed in an own vehicle in which a positioning method is switched between a first positioning method for performing positioning on the basis of reception information of a positioning signal received from a positioning satellite and augmentation information for augmenting the reception information, and a second positioning method for performing positioning on the basis of the reception information and positioning assistance information received from a positioning server over a network, wherein the first positioning method is switched to the second positioning method on the basis of an interruption period in which accuracy is reduced and a validity period of the augmentation information in the first positioning method.

2. The self-position acquisition device according to claim 1, wherein

   on the basis of the interruption period and the validity period of the augmentation information, a first time point that is a time point at which the validity period of the augmentation information, reception of which is completed earlier than the interruption period, ends, and a second time point that is a validity period start time of the augmentation information, reception of which starts after the interruption period ends, are identified, and
   the first positioning method is switched to the second positioning method by comparing the first time point and the second time point.

3. The self-position acquisition device according to claim 2, wherein

   the first positioning method is maintained in a case where the second time point arrives by the first time point, and the switching to the second positioning method is performed in a case where the second time point arrives later than the first time point.

4. The self-position acquisition device according to claim 1, wherein the interruption period is an obstruction period in which a space above the own vehicle is obstructed.

5. The self-position acquisition device according to claim 1, wherein

   information about an accuracy state of a wheel odometry method is acquired by an inside environment recognition device installed in the own vehicle,
   in accordance with the following Mathematical Expression 1 regarding the number of positioning satellites and the following Mathematical Expression 2 regarding the accuracy state of the wheel odometry method, as a calculation method for calculating a moving amount of a vehicle for estimating a self-position within the interruption period, switching to a first calculation method for calculating the moving amount of a vehicle is performed based on the positioning satellites in a case where Mathematical Expression 1 is established; and
   in a case where Mathematical Expression 1 is not established and Mathematical Expression 2 is established, switching to a second calculation method for calculating the moving amount of a vehicle is performed based on the wheel odometry method.

$$[\text{Mathematical Formula 1}]$$

$$N1 \geq Nsat1$$

N1: the number of satellites that meet all of the following conditions of
observable positioning satellites,
a time to an interruption start which is longer than or equal to a predetermined value (Tthr), and
positioning satellites having the following relationship between an own vehicle travel orientation (Dvehicle) based on a travel route, an azimuth angle (Dsat) of each of the positioning satellites, and Dthr within a predetermined range,

$$Dvehicle - Dsat \;\%\; 180 < Dthr$$

here, "%" means a remainder symbol, and
Nsat1: predetermined first threshold value regarding the number of satellites

$$[\text{Mathematical Formula 2}]$$

$$Ind < Det1$$

Ind: index of accuracy state of wheel odometry method, and
Det1: predetermined first threshold value regarding accuracy state of wheel odometry method

6. The self-position acquisition device according to claim 5, wherein, in a case where Mathematical Expression 1 and Mathematical Expression 2 are not established, in accordance with the following Mathematical Expression 3 regarding the accuracy state of the wheel odometry method and the following Mathematical Expression 4 regarding the number of positioning satellites,

switching to the second calculation method is performed, in a case where Mathematical Expression 3 is established, and
switching to the first calculation method is performed, in a case where Mathematical Expression 3 is not established or Mathematical Expression 4 is established.

$$[\text{Mathematical Formula 3}]$$

$$Det1 \leq Ind < Det2$$

Ind: index of accuracy state of wheel odometry method
Det1: predetermined first threshold value regarding accuracy state of wheel odometry method
Det2: predetermined second threshold value regarding accuracy state of wheel odometry method

$$[\text{Mathematical Formula 4}]$$

$$N2 \geq Nsat2$$

N2: the number of satellites that meet all of the following conditions of
observable positioning satellites,
a time to an interruption start which is longer than or equal to a predetermined value (Tthr), and
positioning satellites having the following relationship between an own vehicle travel orientation (Dvehicle) based on a travel route, an azimuth angle (Dsat) of each of the positioning satellites, and Dthr within a predetermined range,

$$|Dvehicle - Dsat| \% 180 < Dthr$$

here, "%" means a remainder symbol, and
Nsat2: predetermined second threshold value regarding the number of satellites

7. The self-position acquisition device according to claim 5, wherein the predetermined first threshold value regarding the accuracy state of the wheel odometry method is changed on the basis of a road surface condition obtained by an outside environment recognition device installed in the own vehicle.

8. The self-position acquisition device according to claim 1, wherein one or more of the interruption period and the validity period of the augmentation information are stored as past history.

9. The self-position acquisition device according to claim 1, wherein the interruption period is calculated using a map.

10. The self-position acquisition device according to claim 9, wherein the map is updated.

11. The self-position acquisition device according to claim 1, wherein

a communication unit installed in the own vehicle calculates the interruption period by using information acquired by a party other than the own vehicle, the information being obtained by performing communication with one or more of another vehicle, road equipment, and a facility, and/or

the communication unit acquires the validity period of the augmentation information from augmentation information that is acquired by the party other than the own vehicle, the augmentation information being obtained by performing communication with one or more of the other vehicle, the road equipment, and the facility.

[FIG. 1]

# FIG. 1

[FIG. 2]

*FIG. 2*

```
                        ┌──────────┐
                        │  START   │
                        └────┬─────┘
                             │
          ┌──────────────────▼──────────────────┐
          │  ACQUIRE AUGMENTATION INFORMATION    │───S101
          └──────────────────┬──────────────────┘
                             │
          ┌──────────────────▼──────────────────┐
          │   CALCULATE INTERRUPTION PERIOD      │───S102
          └──────────────────┬──────────────────┘
                             │
                             │              S103
                    ◇────────▼────────◇
                   ╱  DOES INTERRUPTION ╲      No
                  ◇    PERIOD OCCUR?     ◇──────────────┐
                   ╲                    ╱               │
                    ◇────────┬────────◇                │
                             │ Yes                     │
          ┌──────────────────▼──────────────────┐      │
          │ IDENTIFY FIRST TIME POINT tA THAT IS │      │
          │ TIME POINT AT WHICH VALIDITY PERIOD  │──S104│
          │ OF AUGMENTATION INFORMATION ENDS,    │      │
          │ RECEPTION OF WHICH IS COMPLETED      │      │
          │ EARLIER THAN INTERRUPTION PERIOD     │      │
          └──────────────────┬──────────────────┘      │
          ┌──────────────────▼──────────────────┐      │
          │ IDENTIFY SECOND TIME POINT tB THAT IS│      │
          │ VALIDITY PERIOD START TIME POINT OF  │──S105│
          │ AUGMENTATION INFORMATION, RECEPTION  │      │
          │ OF WHICH IS STARTED AFTER END OF     │      │
          │ INTERRUPTION PERIOD                  │      │
          └──────────────────┬──────────────────┘      │
                             │              S106        │
                    ◇────────▼────────◇                │
                   ╱  DOES SECOND TIME  ╲    Yes        │
                  ◇  POINT tB ARRIVE BY   ◇─────────┐   │
                   ╲  FIRST TIME POINT tA?╱         │   │
                    ◇────────┬────────◇            │   │
                             │ No                  │   │
          ┌──────────────────▼──────────────────┐  │   │
          │ PERFORMS SWITCHING TO SECOND         │  │   │
          │ POSITIONING METHOD AT FIRST TIME     │──S107│
          │ POINT tA                             │  │   │
          └──────────────────┬──────────────────┘  │   │
          ┌──────────────────▼──────────────────┐  │   │
          │ RETURN TO FIRST POSITIONING METHOD   │──S108│
          │ AT TIMING OF SECOND TIME POINT tB    │  │   │
          └──────────────────┬──────────────────┘  │   │
                      S109   │              S110    │   │
          ┌──────────────────▼──────────────────┐  │ ┌─▼──────────────┐
          │ DISCONNECT COMMUNICATION LINK ETC.,  │  │ │   MAINTAIN     │
          │ USED IN SECOND POSITIONING METHOD    │  │ │ FIRST          │
          └──────────────────┬──────────────────┘  │ │ POSITIONING    │
                             │                      │ │ METHOD         │
                             │◄─────────────────────┴─┴────────────────┘
                        ┌────▼─────┐
                        │   END    │
                        └──────────┘
```

[FIG. 3]

## FIG. 3

EP 4 657 121 A1

FIG. 4A

EP 4 657 121 A1

[FIG. 4B]

*FIG. 4B*

[FIG. 5]

# FIG. 5

[FIG. 6]

## FIG. 6

[FIG. 7]

# FIG. 7

```
                    ( START )
                        │
                        ▼
┌──────────────────────────────────────────────────┐  S201
│ COUNT NUMBER (N1) OF SATELLITES THAT MEET ALL      │
│ FOLLOWING CONDITIONS                               │
│ · OBSERVABLE POSITIONING SATELLITES                │
│ · TIME TO INTERRUPTION START WHICH IS LONGER THAN  │
│   OR EQUAL TO PREDETERMINED VALUE (Tthr)           │
│ · AZIMUTH ANGLES OF POSITIONING SATELLITES WHICH   │
│   ARE SMALLER THAN OR EQUAL TO +Dthr/2 IN          │
│   TRAVELING DIRECTION                              │
└──────────────────────────────────────────────────┘
                        │
                        ▼
```

S202 — IS NUMBER (N1) OF SUITABLE SATELLITES MORE THAN OR EQUAL TO THRESHOLD VALUE Nsat1? $N1 \geq Nsat1$ — Yes →

No ↓

S203 — IS INDEX (Ind) OF ACCURACY STATE OF WHEEL ODOMETRY LESS THAN THRESHOLD VALUE (Det1)? $Ind < Det1$ — Yes →

No ↓

S204 — IS INDEX (Ind) OF ACCURACY STATE OF WHEEL ODOMETRY LESS THAN THRESHOLD VALUE (Det2)? $Det1 \leq Ind < Det2$ — No →

Yes ↓

```
┌──────────────────────────────────────────────────┐  S205
│ COUNT NUMBER (N2) OF SATELLITES THAT MEET ALL      │
│ FOLLOWING CONDITIONS                               │
│ · OBSERVABLE POSITIONING SATELLITES                │
│ · TIME TO INTERRUPTION START WHICH IS LONGER THAN  │
│   OR EQUAL TO PREDETERMINED VALUE (Tthr)           │
│ · AZIMUTH ANGLES OF POSITIONING SATELLITES WHICH   │
│   ARE SMALLER THAN OR EQUAL TO ±Dthr/2 IN          │
│   TRAVELING DIRECTION                              │
└──────────────────────────────────────────────────┘
```

S206 — IS NUMBER (N2) OF SUITABLE SATELLITES MORE THAN OR EQUAL TO THRESHOLD VALUE Nsat2? $N2 \geq Nsat2$ — Yes →

No ↓

S207 — PERFORM SWITCHING TO SECOND CALCULATION METHOD

S208 — PERFORM SWITCHING TO FIRST CALCULATION METHOD

```
                    ( END )
```

[FIG. 8]

*FIG. 8*

# EP 4 657 121 A1

## INTERNATIONAL SEARCH REPORT

| International application No. |
|---|
| **PCT/JP2023/030494** |

### A.  CLASSIFICATION OF SUBJECT MATTER

***G01S 19/08***(2010.01)i; ***G01S 19/25***(2010.01)i; ***G01S 19/33***(2010.01)i; ***G01S 19/37***(2010.01)i
FI:   G01S19/08; G01S19/25; G01S19/33; G01S19/37

According to International Patent Classification (IPC) or to both national classification and IPC

### B.  FIELDS SEARCHED

Minimum documentation searched (classification system followed by classification symbols)

G01S19/00 - G01S19/55; G01C21/26 - G01C21/36

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)



### C.  DOCUMENTS CONSIDERED TO BE RELEVANT

| Category* | Citation of document, with indication, where appropriate, of the relevant passages | Relevant to claim No. |
|---|---|---|
| A | JP 2009-115573 A (ALPINE ELECTRONICS INC.) 28 May 2009 (2009-05-28)<br>entire text, all drawings | 1-11 |
| A | JP 2022-168511 A (CORE CORP.) 08 November 2022 (2022-11-08)<br>entire text, all drawings | 1-11 |
| A | JP 2019-117123 A (DENSO CORPORATION) 18 July 2019 (2019-07-18)<br>entire text, all drawings | 1-11 |
| A | JP 2004-125667 A (MATSUSHITA ELECTRIC INDUSTRIAL CO., LTD.) 22 April 2004<br>(2004-04-22)<br>entire text, all drawings | 1-11 |
| A | JP 2022-103546 A (HONDA MOTOR CO., LTD.) 08 July 2022 (2022-07-08)<br>entire text, all drawings | 1-11 |
| A | US 2021/0116579 A1 (VALEO COMFORT AND DRIVING ASSISTANCE) 22 April 2021<br>(2021-04-22)<br>entire text, all drawings | 1-11 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 September 2023** | **10 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** |  |
| | Telephone No. |

Form PCT/ISA/210 (second sheet) (January 2015)

32

## INTERNATIONAL SEARCH REPORT
### Information on patent family members

| International application No. |
|---|
| **PCT/JP2023/030494** |

| Patent document cited in search report | | | Publication date (day/month/year) | Patent family member(s) | | | Publication date (day/month/year) |
|---|---|---|---|---|---|---|---|
| JP | 2009-115573 | A | 28 May 2009 | (Family: none) | | | |
| JP | 2022-168511 | A | 08 November 2022 | WO | 2022/230813 | A1 | |
| | | | | entire text, all drawings | | | |
| JP | 2019-117123 | A | 18 July 2019 | US | 2020/0326190 | A1 | |
| | | | | entire text, all drawings | | | |
| | | | | WO | 2019/130916 | A1 | |
| | | | | DE | 112018006704 | T5 | |
| | | | | CN | 111527418 | A | |
| JP | 2004-125667 | A | 22 April 2004 | (Family: none) | | | |
| JP | 2022-103546 | A | 08 July 2022 | US | 2022/0204046 | A1 | |
| | | | | entire text, all drawings | | | |
| | | | | CN | 114684190 | A | |
| US | 2021/0116579 | A1 | 22 April 2021 | (Family: none) | | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009115573 A